# EUROPEAN PATENT APPLICATION

(11) **EP 4 644 583 A1**
(43) Date of publication of application: **05.11.2025**
(21) Application number: 23911206.3
(22) Date of filing: 17.03.2023
(51) Int. Cl.: C23C 24/04, B24C 1/06, B24C 11/00, C23C 26/00, F16C 33/10, F16C 33/12, F16C 33/14

(54) **SURFACE TREATMENT METHOD FOR SLIDING MEMBERS, AND SLIDING MEMBER**

(30) Priority: 27.12.2022 JP 2022210061
(71) Applicant: FUJI KIHAN CO., LTD., Aichi 462-0063 (JP)
(72) Inventor: MIYASAKA Yoshio, Nagoya-shi Aichi 462-0063 (JP)
(74) Representative: Zemanová, Veronika
(86) International application number: PCT/JP2023/010656
(87) International publication number: WO 2024/142421

(57) **Abstract**

The present invention involves forming a solid lubricant coating material having high adhesion strength on the surface of a sliding portion of a sliding member at low cost. Specifically, a molybdenum coating 30 is formed on the surface of a sliding portion 11 of a sliding member 10 by spraying, on the sliding portion 11 to cause collision with the same, spray particles 22 containing molybdenum having a particle size of #100 to #800 or a molybdenum alloy at a spray pressure of at least 0.2 MPa to cause molybdenum in the spray particles 22 to diffuse and penetrate the sliding portion. Because of the heat generated due to sliding of the sliding portion 11 against a counterpart member with a lubricating oil therebetween when the sliding member 10 is used, the molybdenum coating 30, which serves as a precursor, reacts with sulfur and oxygen contained in the lubricating oil and the counterpart member to form a solid lubricant coating containing molybdenum disulfide and molybdenum oxide.

## Description

### [Field of the invention]

The present invention relates to a surface treatment method for a sliding member and a sliding member, and more particularly, to a surface treatment method for a sliding member capable of improving slidability on a surface of a sliding portion of the sliding member, and a sliding member having a surface structure obtained by the surface treatment method.

### [Background of the invention]

As one of the surface treatment methods for the sliding member, there is known "shot peening" carried out for work-hardening and surface strengthening by imparting compressive residual stress.

For example, as a surface treatment method using shot peening described above, Patent Document 1 described below discloses an instantaneous heat treatment method, in which a mixture of three or more types of shots having approximate particle sizes with hardness higher than that of a base material of a metal product is intermittently impinged onto the surface of the metal product at a high ejection density, thereby instantly and repeatedly subjecting the metal product surface to rapid heating and cooling to form a uniform micronized structure in the vicinity of the surface of the metal product and form micro-dimples that serve as oil reservoirs on the surface of the metal product.

In addition, as a method of lubricating the sliding member, lubrication using a layered-structure solid lubricant with a layered crystal structure such as graphite (C), molybdenum disulfide (MoS₂), tungsten disulfide (WS₂), and boron nitride (BN) is also known in the art.

In some cases, such a layered-structure solid lubricant is added to a fluid lubricant such as a lubricating oil or grease, and may also be used to form a solid lubricant coating on a surface of a sliding member to improve slidability.

Regarding a method of forming such a layered-structure solid lubricant coating, Patent Document 2 described below examines a method of forming a layered-structure solid lubricant coating directly on a sliding portion of a sliding member by ejecting particles of the layered-structure solid lubricant as ejection particles (see paragraphs [0007] to [0014] of Patent Document 2).

### [Related Art Documents]

### [Patent Document]

| | |
|---|---|
| [Patent Document 1] | Japanese Patent No. 5341971 |
| [Patent Document 2] | Japanese Patent No. 3993204 |

### [Summary of the invention]

### [Problems to be solved by the invention]

Decarbonization became a global requirement for protecting the global environment and combating climate change. For example, the automobile industry is facing a once-in-a-century transformation in which a power source of automobiles is being shifted from internal combustion engines such as gasoline or diesel engines to electric motors.

Both a rotor and a stator included in a core of an automobile electric motor are formed by laminating a plurality of 0.15 to 0.5 mm electromagnetic steel sheets punched in a predetermined shape. Therefore, in order to improve productivity of electric motors, as a core component of electric vehicles, and to reduce the price of electric motors and further the price of electric vehicles having the electric motors, there is a strong demand for an increase in the punching speed of the electromagnetic steel sheets.

In response to this demand, a press machine that punches electromagnetic steel sheets performs punching at a high speed of 200 spm (shots per minute) or faster, and in the future, it will be desired to further increase this punching speed.

As a result, sliding members such as a crankshaft provided in the press machine used for such high-speed punching are required to withstand high-speed sliding contact with another member such as a cam.

Furthermore, there are concerns that the fast transition from internal combustion engines to electric motors as a driving source for automobiles will lead to supply shortages and price increases for the electromagnetic steel sheets, as a main material in electric motors.

For this reason, automakers are responding to the supply shortage and rising prices of electromagnetic steel sheets by reducing the material use, and also promoting miniaturization of electric motors for automobiles in order to reduce the weight of motors.

Meanwhile, research and development are also being conducted for increasing rotational speed of the automobile electric motors so as to obtain the maximum output of the same level as that of the existing internal combustion engines and compensate for the decrease in torque that comes with miniaturization of the electric motors by increasing the rotational speed.

As a result, the maximum rotational speed of automobile electric motors is currently around 13,000 rpm, and for high-speed models around 20,000 rpm. However, it is predicted that this will reach 50,000 rpm within a few years, and it is expected that they will be used at a rotational speed significantly higher than the maximum rotational speed of automobile internal combustion engines (around 6,000 to 7,000 rpm).

Therefore, bearings, shafts, gears, and other sliding members installed in an "electric axle" as an electric drive module for automobiles, that integrates such high-speed electric motors, inverters, gearboxes, and the like, are also required to withstand such high-speed sliding, and it is becoming difficult to obtain necessary slidability by directly adapting to existing technologies.

In addition, a demand for decarbonization extends to the manufacture of various automobile parts, and in order to reduce the amount of material used and the like, fabrication of automobile parts is shifting from cutting to manufacturing using plastic processing such as rolling or forging, which does not require cutting allowances and does not waste material. Therefore, there is a demand for using plastic processing to manufacture even parts having a complex shape that requires major change in shape of the material.

Meanwhile, such plastic processing itself is required to be performed in an energy-saving manner. Therefore, there is a demand for cold plastic processing, which is energy-saving in that it does not heat the material, has little dimensional change caused by heat, and does not require secondary processing for dimensional adjustment and the like.

As a result, materials are now in sliding contact with the molding surface of plastic processing die, such as a die used for rolling, forging, or the like, at extremely high contact pressure, and the conditions under which these dies are used are becoming harsher year after year.

As such, even just looking at automobile-related technologies as an example, the harshness of the sliding condition on the sliding portion of sliding member is steadily increasing year after year. This trend is not limited to automobile-related technologies, but is also being required in other technical fields. In addition, it is becoming increasingly difficult to obtain sufficient sliding performance for the sliding portion of the sliding member by simply performing existing surface treatment or lubrication with a lubricating oil.

For example, the surface treatment (instantaneous heat treatment) described in the aforementioned Patent Document 1 strengthens the surface structure by micronization through shot peening or the like, and improves retention of the lubricating oil by forming micro-dimples. However, the inventor found through tests that, in the sliding member that comes into sliding contact with another member at a high speed or with a high surface pressure as described above, the temperature of the lubricating oil becomes too high and it loses viscosity, which causes the oil coating to break down and results in seizure in the sliding portion.

In this way, in the sliding portion of the sliding member that comes into sliding contact with another member under harsh conditions, even when the surface is strengthened or dimples serving as oil reservoirs are formed by the aforementioned shot peening, it is becoming increasingly difficult to obtain sufficient slidability using lubrication with a lubricating oil alone. In light of the above, the inventor of the present invention attempted composite lubrication by using not only lubrication with a lubricating oil but also the aforementioned solid lubricant.

However, even when a lubricating oil containing molybdenum disulfide as an additive was used in addition to surface strengthening and the formation of dimples serving as oil reservoirs by shot peening, it was difficult to prevent seizure in the sliding portion that slides under the harsh sliding conditions described above.

Therefore, the inventor of the present invention came up with the idea of combining two processes, namely, the surface strengthening and formation of micro-dimples by shot peening, as in Patent Document 1, and the formation of a molybdenum disulfide coating.

However, as already verified in Patent Document 2, molybdenum disulfide is an extremely brittle substance having a layered crystal structure. Therefore, if a molybdenum disulfide coating is formed by ejecting the molybdenum disulfide as ejection particles at high ejection pressure onto the surface of the treatment object and causing them to impinge on the surface of the treatment object, the ejection particles will be crushed into pieces in a single ejection. If the solid lubricant particles that have been used once are recycled and reused, not only the processing condition changes, but as the ejection particles are micronized as the crushing progresses, it becomes more difficult to form a solid lubricant coating on the surface of the sliding member (see Patent Document 2, [0012]).

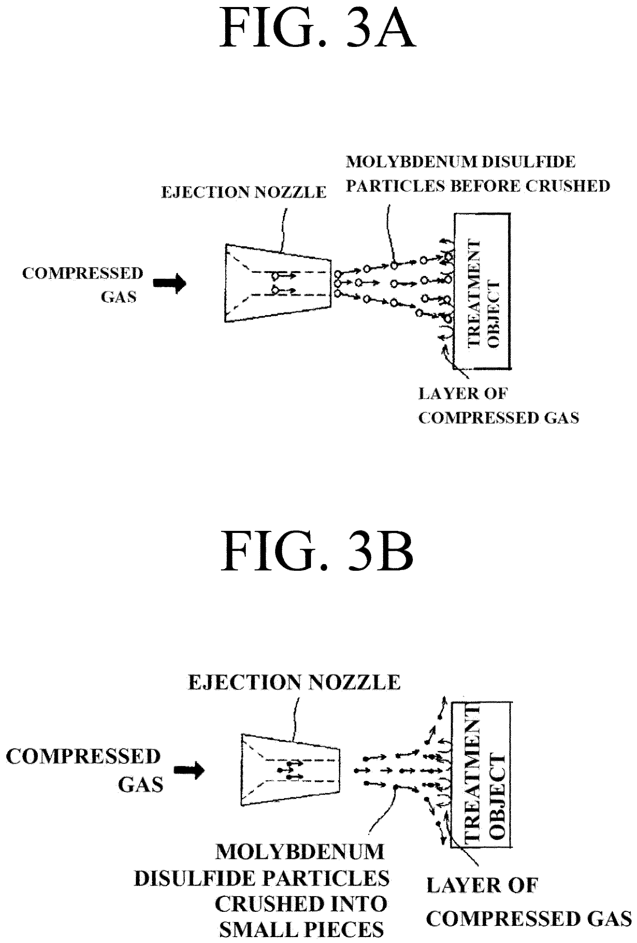

It is conceived that the phenomenon in which such a coating becomes difficult to form is due to the fact that, when the ejection particles are ejected to the surface of the treatment object together with the compressed gas, a layer of the compressed gas is formed on the surface of the treatment object by the compressed gas that impinges on the treatment object and reverses direction as shown in FIGS. 3A and 3B.

That is, even when such a layer of the compressed gas is formed, if the molybdenum disulfide particles as ejection particles are not crushed and maintain a relatively large particle diameter (having a large mass), the molybdenum disulfide particles can pass through this layer of compressed gas by inertia and reach the surface of the treatment object as shown in FIG. 3A.

However, it is conceived that, if the molybdenum disulfide particles are finely crushed and the mass of each particle is reduced, the molybdenum disulfide particles are repelled by the layer of compressed gas formed on the surface of the treatment object, and are redirected along the surface of the treatment object together with the compressed gas as shown in FIG. 3B, so that particles that can reach the surface decreases, and this makes it difficult to form the molybdenum disulfide coating.

As a result, if an attempt is made to eject molybdenum disulfide particles to form a molybdenum disulfide coating directly on a sliding portion of a sliding member, the molybdenum disulfide particles ejected as ejection particles cannot be recycled and must be replaced after one or several ejection operations. As a result, it costs a great deal to form the molybdenum disulfide coating.

Furthermore, the molybdenum disulfide coating is formed on the sliding portion of the sliding member by ejecting molybdenum disulfide particles as ejection particles. The molybdenum disulfide coating formed by this method has a relatively weak adhesion strength, and it may peel off when it is formed on the sliding portion of the sliding member used under the harsh sliding conditions described above.

It is conceived that this weak adhesion strength is caused, because the molybdenum disulfide has a relatively low density (density: 5.06 g/cm³) and is lightweight, and the impingement energy generated by impinging the molybdenum disulfide particles on the surface of the sliding portion is relatively low, so that it is difficult to diffuse or penetrate molybdenum disulfide into the surface of the sliding member, and the penetration depth is also shallow.

For this problem, the aforementioned Patent Document 2 proposes not to eject particles of a layered-structure solid lubricant such as molybdenum disulfide alone, but to eject them as a mixture with particles of a soft metal solid lubricant having an oxidized surface (Claim 1 of Patent Document 2, and the like).

However, if ejection particles of different materials are mixedly used, it becomes necessary to separate them on a material basis again and perform other similar procedures when carrying out disposal or other post-treatment of the used ejection particles, as well as crushed or otherwise altered ejection particles collected together with dust or the like. This makes subsequent processing cumbersome.

The present invention has been made to solve the problems of the prior art described above, and aims to provide a surface treatment method for a sliding member by which a solid lubricant coating that has high adhesion strength and exhibits high lubricity can be formed on the surface of the sliding member at low cost using a relatively simple method.

### [Means for solving the problem]

Means for solving the problems are described below with reference numerals used in the detailed description of the preferred embodiments. These reference numerals are intended to clarify the correspondence between the descriptions in the claims and the descriptions in the detailed description of the preferred embodiments, and it is needless to say that these reference numerals should not be used to restrictively interpret the technical scope of the present invention.

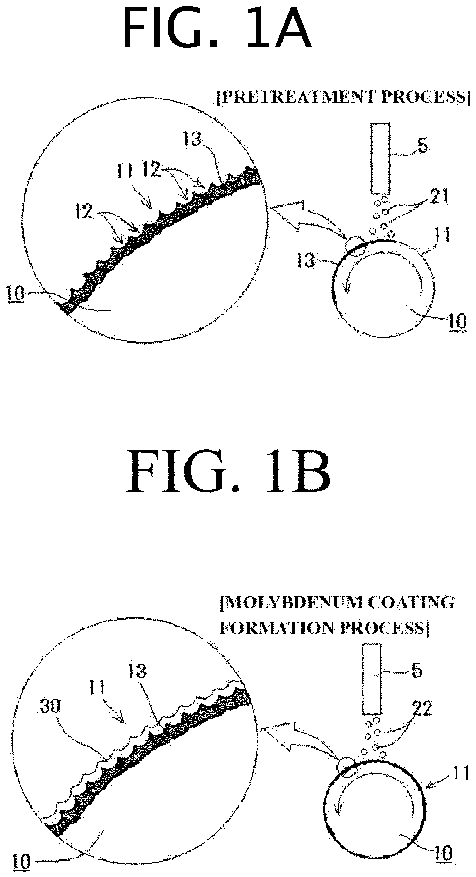

In order to achieve the above object, a surface treatment method for a sliding member according to the present invention is characterized by forming a molybdenum coating 30 as a precursor of a solid lubricant coating on a surface of a metal sliding portion 11 of a sliding member 10 that is brought into contact with another member in the presence of a lubricating oil, by ejecting ejection particles 22 made of molybdenum or a molybdenum alloy having a particle size of #100 to #800 at an ejection pressure of 0.2 MPa or higher onto the sliding portion 11 and causing the ejection particles 22 to impinge on the sliding portion 11 so as to diffuse and penetrate the molybdenum in the ejection particles 22 into the surface of the sliding portion 11 (FIG. 1B).

The method may further comprise prior to the molybdenum coating formation treatment a pretreatment process of forming arc-shaped concavities 12 on the surface of the sliding portion 11 and obtaining a micronized surface structure 13 by ejecting shots 21 of substantially spherical particles having a particle size of #220 to #800 and a hardness equal to or greater than that of the sliding portion onto the sliding portion 11 of the sliding member 10 at an ejection pressure of 0.2 MPa or higher and causing the shots 21 to impinge on the sliding portion 11 (FIG. 1A).

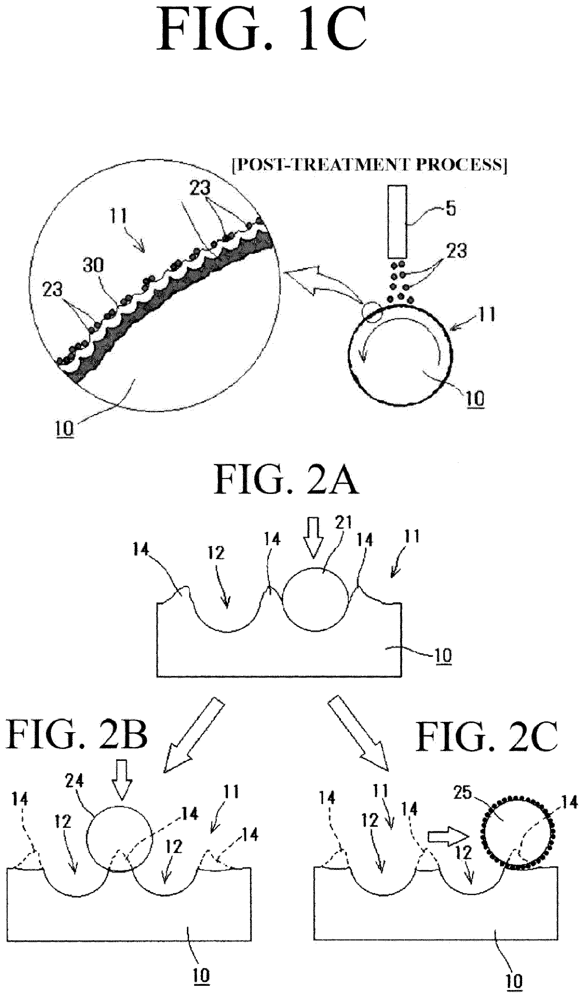

The method may further comprise after the molybdenum coating formation treatment a post-treatment process of ejecting particles of molybdenum disulfide 23 onto the sliding portion 11 of the sliding member 10 and causing the particles of molybdenum disulfide 23 to impinge on the sliding portion 11 (FIG. 1C).

Moreover, a sliding member 10 according to the present invention is characterized by that a molybdenum coating 30 which serves as a precursor to the solid lubricant coating formed on a surface of a metallic sliding portion 11 of a sliding member 10 used in contact with another member in the presence of a lubricating oil.

The sliding member 10 may have the molybdenum coating 30 which is formed on the surface of the sliding portion 11 having a nano-level micronized surface structure 13 and a large number of arc-shaped concavities 12 that serve as oil reservoirs.

Furthermore, the molybdenum coating 30 may carry molybdenum disulfide 23.

### [Effect of The Invention]

The molybdenum coating 30 formed on the sliding portion 11 of the sliding member 10 by the "molybdenum coating formation process" employed in the method of the present invention becomes a solid lubricant coating through a subsequent chemical reaction. The molybdenum coating 30 is a precursor material (hereinafter, referred to as a "precursor") to the solid lubricant coating, and is not itself a solid lubricant coating. Therefore, a solid lubricant coating is not formed on the sliding portion of the sliding member by merely carrying out the surface treatment method according to the present invention.

However, since mineral oil-based lubricating oils inevitably contain sulfur, when the sliding portion 11 of the sliding member 10 on which the molybdenum coating 30 has been formed by the method of the present invention is brought into sliding contact with another member through a mineral oil-based lubricating oil, the temperature rise of the lubricating oil accompanying the sliding contact causes the sulfur contained in the lubricating oil to chemically react with the molybdenum coating 30, thereby forming a molybdenum disulfide coating, which is a solid lubricant coating.

In addition, even when a synthetic oil-based lubricating oil is used, if the lubricating oil contains sulfide such as molybdenum disulfide or tungsten disulfide as an additive, or if the mating contact member contains sulfur, the sulfur will react chemically with the molybdenum coating 30 as the temperature of the lubricating oil rises at the time of sliding contact, and form a molybdenum disulfide coating, which is a solid lubricant coating.

Even when neither the lubricating oil nor the mating member contains sulfur, if the temperature of the lubricating oil rises at the time of sliding contact, the molybdenum coating 30 will react chemically with oxygen, so that a molybdenum oxide coating, which is a solid lubricant coating, is formed.

In this way, the molybdenum coating 30 is formed on the sliding portion 11 of the sliding member 10 using the surface treatment method according to the present invention. Therefore, when the sliding member 10 is used, a solid lubricant coating made of molybdenum disulfide or molybdenum oxide is inevitably formed by using this molybdenum coating 30 as a precursor. Therefore, it is possible to improve slidability of the sliding portion.

Furthermore, unlike molybdenum disulfide, which is a very brittle material due to its layered structure, the ejection particles 22 made of molybdenum (body-centered cubic structure) and a molybdenum alloy are harder than molybdenum disulfide and can be used repeatedly. Therefore, it is possible to economically form the aforementioned molybdenum coating 30, which serves as a precursor to the solid lubricant coating.

Moreover, the density of molybdenum or a molybdenum alloy (10.28 g/cm³ for molybdenum) is higher than that of molybdenum disulfide (5.06 g/cm³), and the impact force that the molybdenum or molybdenum alloy ejection particles 22 impart onto the surface of the sliding member 10 at the time of impingement is large. Therefore, it is possible to diffuse and penetrate molybdenum relatively deep into the surface of the sliding member 10, and form a molybdenum coating 30 having high adhesion strength.

As a result, it is possible to also increase the adhesion strength of the solid lubricant coating of molybdenum disulfide or molybdenum oxide formed by using such a molybdenum coating 30 having high adhesion strength as a precursor, and to allow the coating to withstand use of the sliding portion 11 of the sliding member 10 under harsh conditions, such as sliding at high velocity or sliding under high surface pressure.

Before the molybdenum coating formation treatment, shot peening is performed by ejecting shots 21, which have a hardness equal to or greater than that of the sliding portion 11 and are substantially spherical with a particle size of #220 to #800, at an ejection pressure of 0.2 MPa or higher onto the sliding portion 11 of the sliding member 10 and causing the shots 21 to impinge on the sliding portion 11 as a pretreatment process, to form arc-shaped concavities 12 on the surface of the sliding portion 11 and obtain a micronized surface structure 13. In this configuration, it was possible to micronize crystal particles on the sliding surface through shot peening, and improve mechanical strength accompanied by work-hardening and imparted compressive residual stress, or the like. In addition, it was possible to improve lubricity by causing the arc-shaped concavities 12 to serve as oil reservoirs. Furthermore, since the grain boundaries are increased by micronizing the surface structure 13, it was possible to easily diffuse and penetrate molybdenum (grain boundary diffusion) in the subsequent molybdenum coating formation treatment.

As a result, it was possible to further improve the adhesion strength of the molybdenum coating 30, and therefore the adhesion strength of the solid lubricant coating formed by using the molybdenum coating 30 as a precursor.

Furthermore, if a post-treatment process for ejecting particles of molybdenum disulfide 23 onto the sliding portion 11 of the sliding member 10 is performed after the molybdenum coating formation treatment, the molybdenum disulfide 23 carried on the molybdenum coating 30 improves the lubricity of the sliding member 10 in the early stage of use. In addition, since the carried molybdenum disulfide 23 serves as a source of sulfur, it is possible to form a solid lubricant coating made of molybdenum disulfide by using the molybdenum coating 30 as a precursor even when the lubricating oil and/or the mating contact member does not contain sulfur.

### BRIEF DESCRIPTION OF THE DRAWINGS

FIGS. 1A to 1C are schematic diagrams for explaining a surface treatment method for a sliding member according to the present invention, wherein FIG. 1A shows a pretreatment process, FIG. 1B shows a molybdenum coating formation process, and FIG. 1C shows a post-treatment process.
FIGS. 2A to 2C are explanatory diagrams of Example 1 and Comparative Example 2-2, wherein FIG. 2A shows a surface state after the pretreatment, FIG. 2B shows a hard bead (molybdenum bead) treatment performed in Example 1, and FIG. 2C shows polishing using elastic abrasives performed in Comparative Example 2-2.
FIGS. 3A and 3B are explanatory diagrams showing problems occurring when forming a solid lubricant coating (molybdenum disulfide coating) by ejecting molybdenum disulfide particles, wherein FIG. 3A shows a state before the molybdenum disulfide particles are crushed, and FIG. 3B shows a state after they are crushed.

### [Embodiments for carrying out the invention]

A surface treatment method for a sliding member according to the present invention will now be described.

### [Treatment Object]

A treatment object of the present invention may include various types of sliding members 10 regardless of their usage, material, or the like, as long as they are sliding members 10 having a metallic sliding portion 11 that makes sliding contact with another member in the presence of a lubricating oil. The treatment object may include, in addition to bearings, gears, shafts, cranks, and the like installed in various machines and devices, various members that make sliding contact with another member, such as a molding surface of a mold such as a molding die.

In particular, the sliding members 10 that make sliding contact with another member under harsh conditions, such as sliding contact at high speed or sliding contact under high surface pressure are suitable for the treatment object. For example, the treatment object of the present invention may include a crankshaft of a press machine used for high-speed punching for an electromagnetic steel sheet used in a core of an automobile electric motor, a bearing, gear, or shaft used in an electric axle, which is an electric drive module for an automobile, a die used for rolling or forging under high surface pressure, and the like.

The lubricating oil to be interposed in the sliding portion 11 at the time of using these sliding members 10 is not particularly limited, and either mineral oil or synthetic oil can be used. However, it is preferable to use a lubricating oil containing sulfur so that a molybdenum disulfide coating can be obtained as a solid lubricant coating formed by using the molybdenum coating described below as a precursor.

Such sulfur may be unavoidably contained as in a mineral oil-based lubricating oil, or may be contained in the form of sulfide such as molybdenum disulfide and tungsten disulfide added to the lubricating oil as an additive.

### [Pretreatment Process]

As shown in FIG. 1A, shot peening is performed as a pretreatment process on the sliding portion 11 of the sliding member 10, which is the treatment object described above. This pretreatment process is not essential in the present invention, and depending on the usage and the like of the sliding member 10, the molybdenum coating formation process described below may be performed directly on the sliding portion 11 of the sliding member 10.

However, for sliding members 10 used under harsh conditions such as high-speed sliding or sliding with high surface pressure, it is desirable to perform this process as a pretreatment of the molybdenum coating formation process described below.

The ejection particles used in this process (pretreatment process) have hardness equal to or greater than that of the metallic sliding portion 11 of the sliding member 10 to be treated, and shots 21 having a particle size of #220 to #800 and a substantially spherical shape are used.

Here, in the present invention, "spherical" does not necessarily mean "sphere" in the strict sense, but broadly includes spheroids, bale-shaped, or other rounded shapes without a corner.

The shots 21 used can be selected from various materials as long as it has hardness equal to or greater than that of the sliding portion 11 of the sliding member 10 to be treated. The shots 21 may include, in addition to metallic shots 21 such as steel beads, stainless steel beads, and high-speed steel beads, non-metallic shots 21 such as glass beads and ceramic beads, and shots 21 made of a mixture of metal and ceramics such as cermet, for example.

The particle diameter of the shots 21 can be selected from a range of #220 to #800 in the particle size distribution specified by the standard JIS R 6001. The particle size distributions based on the standard JIS R 6001 are shown in Tables 1 and 2 below.

In the following tables, Table 1 shows a particle size distribution of coarse particles, and Table 2 shows a particle size distribution of fine powders obtained by a magnified photograph test method.

**[TABLE 1]**

| Particle size distribution of coarse particles (JIS R 6001) | | | | | | | | | |
|---|---|---|---|---|---|---|---|---|---|
| Particle size | Standard Sieve which should be passed through at 100% (One step) | Standard Sieve on which particles may be remained up to a fixed amount and the remained amount of the particles (Two steps) | | Standard Sieve on which particles may be remained more than a fixed amount and the remained amount of the particles (Three steps) | | Two standard sieves on which particles for the two sieves should be remained amount of the particles in total (Three steps + Four steps) | | | Standard sieve which may be passed through up to 3 % at the maximum (Five steps) |
| | µ | µ | % | µ | % | µ | | % | µ |
| # 8 | 4000 | 2830 | 15 | 2380 | 45 | 2380 | 2000 | 80 | 1680 |
| #10 | 3360 | 2380 | 15 | 2000 | 45 | 2000 | 1680 | 80 | 1410 |
| #12 | 2830 | 2000 | 15 | 1680 | 45 | 1680 | 1410 | 80 | 1190 |
| #14 | 2380 | 1680 | 15 | 1410 | 45 | 1410 | 1190 | 80 | 1000 |
| #16 | 2000 | 1410 | 15 | 1190 | 45 | 1190 | 1000 | 80 | 840 |
| #20 | 1690 | 1190 | 15 | 1000 | 45 | 1000 | 840 | 80 | 710 |
| #24 | 1190 | 840 | 25 | 710 | 45 | 710 | 590 | 70 | 500 |
| #30 | 1000 | 710 | 25 | 590 | 45 | 590 | 500 | 70 | 420 |
| #36 | 840 | 590 | 25 | 500 | 45 | 500 | 420 | 70 | 350 |
| #46 | 590 | 420 | 30 | 350 | 40 | 350 | 297 | 65 | 250 |
| #54 | 500 | 350 | 30 | 297 | 40 | 297 | 259 | 65 | 210 |
| #60 | 420 | 297 | 30 | 250 | 40 | 250 | 210 | 65 | 177 |
| #70 | 350 | 250 | 25 | 210 | 40 | 210 | 177 | 65 | 149 |
| #80 | 297 | 210 | 25 | 177 | 40 | 177 | 149 | 65 | 125 |
| #90 | 250 | 177 | 20 | 149 | 40 | 149 | 125 | 65 | 105 |
| #100 | 210 | 149 | 20 | 125 | 40 | 125 | 105 | 65 | 74 |
| #120 | 177 | 125 | 20 | 105 | 40 | **105** | 88 | 65 | 63 |
| #150 | 149 | 105 | 15 | 74 | 40 | 74 | 63 | 65 | 44 |
| #180 | 125 | 88 | 15 | 63 | 40 | 63 | 53 | 65 | - |
| #220 | 105 | 74 | 15 | 53 | 40 | 53 | 44 | 60 | - |

**[TABLE 2]**

| Particle size distribution of fine powders based on a testing method using a magnified photograph (JIS R 6001) Unit:µ | | | |
|---|---|---|---|
| Particle size | Average diameter of the largest particle | Average diameter of the 30^{th} particle from the largest particle | Average of average diameters |
| #240 | 171 or less | 120 or less | 87.5 to 73.5 |
| #280 | 147 or less | 101 or less | 73.5 to 62 |
| #320 | 126 or less | 85 or less | 62 to 52.5 |
| #360 | 108 or less | 71 or less | 52.5 to 44 |
| #400 | 92 or less | 60 or less | 44 to 37 |
| #500 | 80 or less | 52 or less | 37 to 31 |
| #600 | 70 or less | 45 or less | 31 to 26 |
| #700 | 61 or less | 39 or less | 26 to 22 |
| #800 | 53 or less | 34 or less | 22 to 18 |
| #1000 | 44 or less | 29 or less | 18 to 14.5 |
| #1200 | 37 or less | 24 or less | 14.5 to 11.5 |
| #1500 | 31 or less | 20 or less | 11.5 to 8.9 |
| #2000 | 26 or less | 17 or less | 8.9 to 7.1 |
| #2500 | 22 or less | 14 or less | 7.1 to 5.9 |
| #3000 | 19 or less | 12 or less | 5.9 to 4.7 |

The shots 21 described above are ejected at an ejection pressure of 0.2 MPa or higher onto the sliding portion 11 of the sliding member 10 and caused the shots 21 to impinge on the sliding portion 11.

The shots 21 can be ejected using various types of known blasting devices that perform dry-ejecting the ejection particles together with compressed gas such as compressed air. For example, the blasting devices may include a direct pressure type blasting device in which compressed gas is supplied to a tank containing the shots 21, and the shots 21 conveyed by the compressed gas are carried on a separately provided compressed gas flow and ejected from the ejection nozzle 5, a gravity type blasting device in which the shots 21 dropped from a tank are carried on the compressed gas and are ejected, and a suction type blasting device in which the shots 21 are suctioned by the negative pressure generated by the discharge of compressed gas and are ejected together with the compressed air, and the like. Any of the known air blasting devices that can dry-eject the ejection particles at an ejection pressure of 0.2 MPa or higher can be used for ejecting the shots 21 in the pretreatment process of the present invention.

By ejecting the shots 21 onto the surface of the sliding portion 11 of the sliding member 10 under the conditions described above, and causing the shots 21 to impinge on the sliding portion 11, micro arc-shaped concavities 12 are formed on the surface of the sliding portion 11 at the impingement portions with the shots 21, due to plastic deformation caused by the impingement with the shots 21.

These arc-shaped concavities 12 function as oil reservoirs that hold the lubricating oil when sliding contact is made with another member in the presence of the lubricating oil, thereby preventing the oil coating from breaking down.

In addition, the crystal structure 13 of the surface layer is uniformly micronized to a nano-level due to the plastic deformation occurring at the impingement portions with the shots 21 and the local and instantaneous heating and fast cooling occurring at the surface of the sliding portion 11 at the impingement portions that absorbs the impingement energy, and further, compressive residual stress is imparted to the surface of the sliding portion 11, so that the mechanical strength of the surface of the sliding portion 11 is improved.

Furthermore, since many crystal grain boundaries are formed by micronization of the surface structure 13 of the sliding portion 11, it is possible to facilitate diffusion and penetration of molybdenum (in particular, grain boundary diffusion) into the surface of the sliding portion 11 in the following "molybdenum coating formation process" described below.

### [Molybdenum Coating Formation Process]

The "molybdenum coating formation process" described below is performed for the sliding portion 11 of the sliding member 10 to be treated, directly or after the aforementioned pretreatment process as necessary.

In this molybdenum coating formation process, as shown in FIG. 1B, ejection particles 22 made of molybdenum or a molybdenum alloy having a particle size of #100 to #800 are ejected at an ejection pressure of 0.2 MPa or higher onto the surface of the sliding portion 11 and are caused the ejection particles 22 to impinge on the surface of the sliding portion 11, so as to diffuse and penetrate the molybdenum of the ejection particles 22 into the surface of the sliding portion 11, thereby forming a molybdenum coating 30 on the surface of the sliding portion 11.

As described above, the ejection particles 22 used to form the molybdenum coating 30 can be either molybdenum particles or molybdenum alloy particles, and a mixture of them can also be used.

Among them, the molybdenum alloy is a material in which one or more alloy components are added to the main material molybdenum. Examples of the alloy components include titanium, zirconium, hafnium, tungsten, rare earth elements, and the like. For example, any of the molybdenum alloys such as Mo-Ti-Zr-C, Mo-Hf-Zr-C, Mo-W-Hf-C, and Mo-W-Hf-Zr-C may be employed as the material for the ejection particles 22 used in the molybdenum coating formation process of the present invention, but the usable molybdenum alloys are not limited thereto.

The particle diameter of the ejection particles 22 used in the molybdenum coating formation process can be selected from a range of #100 to #800 in the particle size distribution specified in the standard JIS R 6001, and the particle size distribution based on the standard JIS R 6001 is as shown in Tables 1 and 2 above.

The shape of the ejection particles 22 used in the molybdenum coating formation process is not particularly limited, and both substantially spherical and angular shapes can be used, and a mixture of them may also be used.

The ejection particles 22 made of molybdenum or a molybdenum alloy as described above are dry-ejected onto the sliding portion 11 of the sliding member 10 to be treated at an ejection pressure of 0.2 MPa or higher using a known air blasting device that dry-ejects the ejection particles 22 together with compressed gas.

As the blasting device used for such ejection, various types of known blasting devices can be used as long as they can dry-eject the ejection particles 22 at an ejection pressure of 0.2 MPa or higher. The direct pressure, gravity, and suction type blasting devices mentioned as the blasting devices that can be used in the pretreatment process can also be used in the molybdenum coating formation process.

When the ejection particles 22 made of molybdenum or a molybdenum alloy are ejected at high speed onto the sliding portion 11 of the sliding member 10 in this manner, the impact caused by the impingement of the ejection particles 22 is absorbed, and the surface of the sliding portion 11 at the impingement portion is deformed, and the temperature locally rises.

In this case, the molybdenum of the ejection particles 22 diffuses and penetrates into the surface of the sliding portion 11. In particular, when molybdenum or molybdenum alloy particles 22 are ejected onto the sliding portion 11 of the sliding member 10 and caused the particles 22 to impinge on the sliding portion 11, whose surface structure 13 has been micronized to a nano level by carrying out the pretreatment process, the number of crystal grain boundaries on the surface of the sliding portion 11 increases due to the micronization, thereby facilitating grain boundary diffusion of molybdenum, so that diffusion and penetration of molybdenum is promoted, and also the molybdenum is allowed to diffuse relatively deep into the surface of the sliding portion 11. Therefore, it is possible to increase the adhesion strength of the molybdenum coating 30 to be formed.

In this way, the coating formed on the sliding portion 11 of the sliding member 10 in the molybdenum coating formation process is merely a coating of "molybdenum", and a coating of "molybdenum disulfide" or "molybdenum oxide", which are known as a solid lubricant, is not directly formed in this process.

However, mineral oil-based lubricating oils inevitably contain sulfur. When the temperature of the lubricating oil rises due to sliding contact with another member, the sulfur contained in the lubricating oil reacts with the molybdenum coating 30 to form a molybdenum disulfide coating which is a solid lubricant coating.

In addition, when a sulfide-based solid lubricant such as molybdenum disulfide and/or tungsten disulfide is added as an additive to the lubricating oil, or when the mating contact member contains sulfur, the sulfur reacts with the molybdenum coating 30 due to the temperature rise caused by sliding contact, so that a molybdenum disulfide coating, which is a solid lubricant coating, is formed.

Furthermore, even when the lubricating oil does not contain sulfur, and the mating sliding contact member does not contain sulfur either, the molybdenum coating 30 reacts with oxygen due to the temperature rise caused by sliding contact, thereby forming a molybdenum oxide coating which is a solid lubricant coating.

In this way, the molybdenum coating 30 obtained in the molybdenum coating formation process does not itself form a solid lubricant coating. However, by subsequently using the sliding member 10, a solid lubricant coating is inevitably formed with this molybdenum coating 30 serving as a precursor. Therefore, it is possible to impart high lubricity to the sliding portion of the sliding member.

Meanwhile, as verified above, in the method of directly forming the molybdenum disulfide coating (solid lubricant coating) on the surface of a sliding portion by ejecting molybdenum disulfide ejection particles, the molybdenum disulfide ejection particles are extremely brittle due to their layered structure and are crushed into small pieces when impinging on the sliding member. Therefore, they are unusable repeatedly, and must be replaced after one or several ejections, which increases the cost of forming the solid lubricant coating. However, in the method according to the present invention, which uses ejection particles made of molybdenum or a molybdenum alloy, it is possible to repeatedly use the ejection particles, and thus economically form the molybdenum coating.

In addition, compared to molybdenum disulfide (having a density of 5.06 g/cm³), the density of molybdenum and molybdenum alloys (10.28 g/cm³ for molybdenum) is higher, and the impact force when impinging on the sliding portion is greater. Therefore, it is possible to further promote diffusion and penetration of molybdenum into the sliding portion, and by diffusing it deeper into the surface, it is possible to increase the adhesion strength of the formed molybdenum coating 30, and thus the adhesion strength of the solid lubricant coating made of molybdenum disulfide and/or molybdenum oxide formed by using this molybdenum coating 30 as a precursor.

As a result, it is possible to impart high slidability to the sliding portion of the sliding member used for sliding under harsh conditions.

### [Post-treatment Process]

For the sliding portion 11 of the sliding member 10 subjected to the molybdenum coating formation process described above, a post-treatment process for ejecting particles of molybdenum disulfide 23 as necessary as shown in FIG. 1C can be further applied.

In this post-treatment process, there is no particular restriction on the treatment conditions such as particle diameter or ejection pressure of the particles as long as the molybdenum disulfide 23 can be carried on the sliding portion 11 of the sliding member 10 on which the molybdenum coating 30 is formed. For example, the post-treatment process can be performed by ejecting particles of molybdenum disulfide 23 (3 to 4 µm molybdenum disulfide powder agglomerated to about 20 µm) at an ejection pressure of 0.7 MPa or higher.

Any of the dry air blasting devices (such as a direct pressure type, gravity type, or suction type) described above can also be employed to eject molybdenum disulfide 23 in this post-treatment process.

In this way, by ejecting molybdenum disulfide 23 as a post-treatment process, the ejected molybdenum disulfide 23 can be carried on the molybdenum coating 30 formed on the sliding portion 11.

As a result, even in the early stage of use of the sliding member, the slidability is exhibited by the molybdenum disulfide 23 carried on the molybdenum coating 30. Therefore, it is possible to significantly improve the sliding performance in the early stage of use.

In addition, by carrying molybdenum disulfide 23 on the molybdenum coating 30, even when the lubricating oil and/or the mating sliding member does not contain sulfur, this molybdenum disulfide 23 serves as a sulfur source. Therefore, it is possible to form a solid lubricant coating made of molybdenum disulfide by using the molybdenum coating 30 as a precursor.

### [Examples]

Next, results of a performance evaluation test for a sliding member whose sliding contact surface is subjected to surface treatment using the method according to the present invention will be described below.

### [Test Example 1]: Crankshaft of Press Machine

### (1) Test method

### (1-1) Treatment Object

A sliding portion in a crankshaft of a high-speed press machine (quenched and tempered SCM440 steel: hardness HRC58: ϕ110 mm x L130 mm) was used as the treatment object.

### (1-2) Treatment Conditions

The following treatment was applied to each of the treatment objects described above.

Example 1: Both the "pretreatment process" and the "molybdenum coating formation process" shown in Table 3 below were applied.

Comparative example 1-1: Only the "pretreatment process" shown in Table 3 below was applied.

**[Table 3]**

| | | |
|---|---|---|
| Treatment conditions in test example 1 Treatment object | Sliding portion in crankshaft of high-speed press machine (quenched and tempered SCM440: hardness HRC58: ϕ110 mm x L130 mm) | |

| | Pretreatment process | Molybdenum coating formation process |
|---|---|---|
| Blasting device | SGF-4(A) (gravity type) Made by Fuji Manufacturing Co., Ltd. | FD-4 (direct pressure type) Made by Fuji Manufacturing Co., Ltd. |
| Shots/ejection particles | Alumina silica beads #500 | Molybdenum #400 |
| Ejection pressure | 0.4 MPa | 0.4 MPa |
| Nozzle used | ϕ9 mm (long) | ϕ5 mm (long) |
| Ejection distance | 100 to 150 mm | 150 to 200 mm |
| Ejection time | Ejecting from one direction for 3 minutes while rotating the treatment object three times per minute | |

### (1-3) Performance Evaluation Method

Each of the crankshafts subjected to treatments in Example 1 and Comparative Example 1-1 was mounted on a high-speed press machine, and the sliding portion of the crankshaft was brought into contact with a bronze plain bearing of a cam while interposing a lubricating oil therebetween.

This high-speed press machine was operated at a punching speed of 3000 cpm, and whether or not there is seizure between the sliding portion of the crankshaft and the bronze plain bearing of the cam was observed.

### (2) Test Result

For the crankshaft of Comparative Example 1-1, which is subjected only to the pretreatment, the temperature of the lubricating oil rose within a short time, and seizure occurred between the sliding portion of the crankshaft and the bronze plain bearing of the cam.

Note that, it is conceived that, when arc-shaped concavities 12 are formed by plastic deformation at the impingement portions with the shots 21 in the pretreatment process, sharp protrusions 14 are formed on the peripheries of the formed concavities 12 by the material pushed out by the impingement with the shots 21 as shown in FIG. 2A, and that these protrusions 14 bite into the bronze plain bearing of the cam in the early stage of the sliding, thereby degrading slidability.

Therefore, in this example, molybdenum beads #400 (hard beads) 24 are ejected following the pretreatment process to further strengthen the surface of the sliding portion 11, and as shown in FIG. 2B, the tips of the protrusions 14 formed on the peripheries of the concavities 12 are crushed with molybdenum beads #400 (hard beads) 24 to adjust the surface roughness, thereby improving an initial fit between the sliding portion of the crankshaft and the bronze plain bearing, and forming a molybdenum coating 30.

In the crankshaft of Example 1 subjected to the surface treatment method of the present invention, no seizure occurred even when the press machine was operated at a high speed of 3000 rpm per one minute.

### [Test Example 2]: Gear for Electric Axle of Electric Vehicle

### (1) Test Method

### (1-1) Treatment Object

The treatment object was a gear for an electric axle of an electric vehicle (carburized, quenched, and tempered SNCM616 steel: hardness HRC56: ϕ50 mm x W60 mm).

### (1-2) Treatment Conditions

The following treatment was applied for each of the above treatment objects.

Example 2: Both the "pretreatment process" and the "molybdenum coating formation process" shown in Table 4 below were carried out.

Comparative Example 2-1: Only the "pretreatment process" shown in Table 4 below was carried out.

Comparative Example 2-2: After the "pretreatment process" shown in Table 4 below, elastic abrasives (obtained by carrying diamond abrasive grains having an average particle diameter of 1 µm on an elastic core having a diameter of 1 mm) were ejected from an oblique direction at an ejection pressure of 0.2 MPa and caused the elastic abrasives to slide along the sliding portion to polish the surface.

**[Table 4]**

| Treatment conditions in test example 2 | | |
|---|---|---|
| Treatment object | Gears for electric axles in electric vehicles (carburized, quenched, and tempered SNCM616 steel: hardness HRC56: ϕ50 mm x W60 mm) | |

| | Pretreatment process | Molybdenum coating formation process |
|---|---|---|
| Blasting device | FD-4 (direct pressure type) Made by Fuji Manufacturing Co., Ltd. | FD-4 (direct pressure type) Made by Fuji Manufacturing Co., Ltd. |
| Shots/ejection particles | High-speed steel beads #400 | Molybdenum #400 |
| Ejection pressure | 0.4 MPa | 0.4 MPa |
| Nozzle used | ϕ5 mm (long) | ϕ5 mm (long) |
| Ejection distance | 150 to 200 mm | 150 to 200 mm |
| Ejection time | Ejecting from three directions, with each direction lasting 30 seconds, while rotating the treatment object six times per minute | |

### (1-3) Performance Evaluation Method

The gears subjected to treatments in Example 2 and Comparative Examples 2-1 and 2-2 were mounted to an electric axle, and the electric motor installed in the electric axle was rotated at a rotation speed of 30,000 rpm.

Observations were made to determine whether seizure occurred between the mating gears that were in contact while a lubricating oil was supplied.

### (2) Test Result

For the gear of Comparative Example 2-1, which is subjected only to the pretreatment, the temperature of the lubricating oil rose within a short time, and seizure occurred.

In Comparative Example 2-2, after the pretreatment process, in order to remove the tips of the protrusions 14 [see FIG. 2A] formed on the peripheries of the arc-shaped concavities 12 in the pretreatment process and improve the initial fit, elastic abrasives 25 were caused to slide along the surface of the sliding portion 11 as shown in FIG. 2C to polish the surface. However, it could not suppress the occurrence of seizure even for the gear of Comparative Example 2-2.

Note that a lubricant containing molybdenum disulfide as an additive was used as the lubricating oil supplied between the gears, but the combined use of the treatment of Comparative Examples 2-1 and 2-2 and the lubricating oil containing molybdenum disulfide alone was not enough to prevent the gear from seizing.

In comparison, for the gear of Example 2 subjected to the surface treatment method according to the present invention, seizure did not occur even when a motor was driven at a high rotation speed of 30,000 rpm, and the temperature of the lubricating oil was kept at 100 °C or below. Therefore, it was possible to confirm that high lubricity was imparted to the sliding portion.

### [Test Example 3]: Forging Die

### (1) Test Method

### (1-1) Treatment Object

The treatment object was a forging die (quenched and tempered YXR33 steel: hardness HRC54: 25 mm x 230 mm for tooth profile formation).

### (1-2) Treatment Conditions

The following treatment was applied to each of the above treatment objects.

Example 3-1: Both the "pretreatment process" and the "molybdenum coating formation process" shown in Table 5 below were carried out.

Example 3-2: After carrying out both the "pretreatment process" and the "molybdenum coating formation process" shown in Table 5 below, a "post-treatment process" was carried out, in which molybdenum disulfide particles (molybdenum disulfide powders having average particle diameters of 3 to 4 µm agglomerated to a particle diameter of about 20 µm) were ejected onto the entire surface at an ejection pressure of 0.7 MPa.

Comparative Example 3-1: No treatment was carried out (untreated product).

Comparative Example 3-2: Only the "pretreatment process" shown in Table 5 below was carried out.

**[Table 5]**

| Treatment conditions in test example 3 | | |
|---|---|---|
| Treatment object | Forging die (quenched and tempered YXR33 steel: hardness HRC54: 25 mm x 230 mm for tooth profile formation) | |

| | Pretreatment process | Molybdenum coating formation process |
|---|---|---|
| Blasting device | FD-4 (direct pressure type) Made by Fuji Manufacturing Co., Ltd. | SGK-4 (gravity type) Made by Fuji Manufacturing Co., Ltd. |
| Shots/ejection particles | High-speed steel beads #400 | Molybdenum #400 |
| Ejection pressure | 0.4 MPa | 0.6 MPa |
| Nozzle used | ϕ5 mm (long) | ϕ9 mm (long) |
| Ejection distance | 150 to 200 mm | 100 to 150 mm |
| Ejection time | Ejecting from three directions, with each direction lasting 1 minute, while vibrating the ejection nozzle slightly | |

### (1-3) Performance Evaluation Method

Using the dies subjected to treatments of Example 3 and Comparative Examples 3-1 and 3-2, manganese steel (SMn433) was subjected to forging while supplying oil, and the number of shots was counted until the die reaches the end of its service life.

### (2) Test Result

The untreated die in Comparative Example 3-1 reached the end of its service life after 100 shots of forging, whereas the die subjected to the pretreatment in Comparative Example 3-2 reached the end of its service life after 150 shots of forging. Although it was confirmed that its service life was extended for the die in Comparative Example 3-2, subjected to the pretreatment process alone, only a 50% extension of the service life was achieved.

The die made of YXR33 steel, a cold work tool steel, is considered to be at the limit of fabrication with the above number of shots in terms of the material, and in order to further extend the number of shots by changing the material, it is necessary to change the die material to cemented carbide. However, using the cemented carbide is not cost-effective.

Meanwhile, using the die of Example 3-1, subjected to both the pretreatment process and the molybdenum coating formation process shown in Table 5, it was possible to extend its service life to 200 shots.

Note that, since a synthetic oil-based lubricating oil having no molybdenum disulfide was used in this test example, it is conceived that a solid lubricant coating made of molybdenum oxide was formed on the sliding portion by using the molybdenum coating as a precursor.

Therefore, as shown in Example 3-2, for the die subjected to both the pretreatment process and the molybdenum coating formation process shown in Table 5, a post-treatment process by ejecting molybdenum disulfide ejection particles was further carried out. As a result, it was possible to extend its service life to 300 shots by increasing a further 100 shots.

In this way, it was possible to confirm the effectiveness of ejecting molybdenum disulfide particles as a post-treatment process following the molybdenum coating formation process when the lubricating oil and/or the mating contact member does not contain sulfur.

### [Description of Reference Numerals]

- 5: Ejection nozzle
- 10: Sliding member
- 11: Sliding portion
- 12: Arc-shaped concavity
- 13: (Micronized) surface structure
- 14: Protrusion
- 21: Shot (for pretreatment process)
- 22: Ejection particle (made of molybdenum or molybdenum alloy)
- 23: (Particle of) molybdenum disulfide
- 24: Hard bead
- 25: Elastic abrasive
- 30: Molybdenum coating (precursor of solid lubricant coating)

## Claims

1. A surface treatment method for a sliding member, comprising a molybdenum coating formation treatment of forming a molybdenum coating on a surface of a metal sliding portion of a sliding member that is brought into contact with another member in the presence of a lubricating oil by ejecting ejection particles made of molybdenum or a molybdenum alloy having a particle size of #100 to #800 at an ejection pressure of 0.2 MPa or higher onto the sliding portion and causing the ejection particles to impinge on the sliding portion so as to diffuse and penetrate the molybdenum in the ejection particles into the surface of the sliding portion.

2. The surface treatment method for the sliding member according to claim 1, prior to the molybdenum coating formation treatment further comprising a pretreatment process of forming arc-shaped concavities on the surface of the sliding portion and obtaining a micronized surface structure by ejecting shots of substantially spherical particles having a particle size of #220 to #800 and a hardness equal to or greater than that of the sliding portion onto the sliding portion of the sliding member at an ejection pressure of 0.2 MPa or higher and causing the shots to impinge on the sliding portion of the sliding member.

3. The surface treatment method for the sliding member according to claim 1 or 2, after the molybdenum coating formation treatment further comprising a post-treatment process of ejecting molybdenum disulfide particles onto the sliding portion of the sliding member and causing the molybdenum disulfide particles to impinge on the sliding portion.

4. A sliding member comprising a molybdenum coating formed on a surface of a metallic sliding portion of a sliding member used in contact with another member in the presence of a lubricating oil.

5. The sliding member according to claim 4, wherein the molybdenum coating is formed on the surface of the sliding portion having a nano-level micronized surface structure and a large number of arc-shaped concavities that serve as oil reservoirs.

6. The sliding member according to claim 4 or 5, wherein molybdenum disulfide is carried on the molybdenum coating.
